# EUROPEAN PATENT APPLICATION

(11) **EP 4 421 721 A1**
(43) Date of publication of application: **28.08.2024**
(21) Application number: 24156388.1
(22) Date of filing: 07.02.2024
(51) Int. Cl.: G06Q 30/018, G06Q 50/18

(54) **A SOFTWARE PORTAL FOR MANAGING ELECTRONIC DOCUMENTS TO FULFIL ONE OR MORE LEGAL REGULATIONS**

(30) Priority: 24.02.2023 IT 202300003231
(71) Applicant: ALV Innova SA, 6900 Lugano (CH)
(72) Inventor: ZICCARDI, Vito, 6965 Cadro (CH)
(74) Representative: Emmi, Mario

(57) **Abstract**

The present invention relates to a method that can be implemented by means of a Personal Computer (PC) or mobile device and that comprises a connection to a specific server that generates a platform into which a subject's data can be inserted and through which the software creates a folder wherein they are present all electronic documents and whatever else is necessary to enable a professional subject to fulfil anti-money laundering regulations.

## Description

### Scope of the invention

The present invention relates to the technical field concerning software portals that assist various professionals (e.g. accountants, labour consultants, notaries, lawyers, etc.) or companies (e.g. real estates and/or SMEs) in order to be able to correctly fulfil various regulations.

In particular, the invention relates to an innovative portal that facilitates fulfilment of anti-money laundering and privacy (GDPR) requirements.

### Brief outline of the prior art

It is well known that in the context of the so-called "regulatory compliance", professionals and companies in general are obliged to comply with various regulations, including anti-money laundering, as well as other types of regulations, such as data protection regulations, thereby ranging from administrative liability to anti-corruption regulations (also called *Anti-Bribery*).

Compliance with these rules is dictated by law in order to ensure transparency and security.

Often, however, compliance with these rules implies a considerable "bureaucratic" effort for the person who has to produce and/or request specific documents.

All this makes it not exactly easy and versatile to work in order to comply with what required.

In the current state of the art, therefore, the user must produce and/or request paper documents in the traditional way, all of which is time-consuming, susceptible to errors and therefore risks of sanctions.

More specifically, certain entities such as accountants, lawyers, estate agents, etc. are obliged by anti-money laundering regulations to produce documents and evidence to that effect.

More specifically, if a client (a company for example) turns to a professional figure (e.g. an accountant) for any activity, the accountant concerned performing that function is obliged to comply with the anti-money laundering regulations.

If, in fact, the client turns to the accountant for an activity such as accounting/consulting on the acquisition of a business, the accountant who supplies that service to his/her client is obliged (the accountant) to comply with anti-money laundering regulations (the accountant must gather a series of information and make a series of checks concerning his/her client and the type of service provided) .

The professional person who therefore handles one or more end-clients with his or her services is obliged, in performing many of his or her functions requested by the client, to comply with anti-money laundering regulations.

As mentioned, this legal obligation, which is required to many professionals when carrying out their activities on behalf of their clients, is often a complex, time-consuming and chaotic operation.

### Summary of the invention

The need is therefore felt for a technical solution that can overcome and/or at least mitigate the limitations of the prior art described above.

In particular, the aim of the present invention is to provide a computer-implemented method that allows to facilitate all the operations required to a user who, in performing his or her job or a function in general, is obliged to comply with anti-money laundering regulations.

It is therefore the aim of the present invention to provide a method that facilitates the user in the task of fulfilling all said legal regulations he/she has to face, from civil liability to anti-money laundering and/or personal data protection regulations.

These and other aims are therefore achieved by the present method (implemented by means of a computer -acronym PC- or mobile device software application), to enable a first user to fulfil anti-money laundering regulations while supplying a service for a second user, according to claim 1.

This method comprises the following operations:
- Remote access of said first user, who must fulfil the anti-money laundering regulations, to the suitably programmed central server system (1), the access being executed through a computer or mobile device provided with a suitable software application;
- Automatic generation by the central server system (1) of at least one electronic folder intended to contain one or more electronic data of said second user for which said first user supplies a service;
- Filling in said folder with said one or more pre-set electronic data;
- The central server system (1), once received such data, being programmed to generate the electronic file of the second user and verifying the correctness of the inserted data;
- The central server system (1) generating an error signal when one or more of the requested data is considered to be erroneous and/or missing;
- And wherein, further, the operation of filling in said folder comprises sending, through said computer or software application (preferably by means of the Internet), at least one or more of the following data to the central server system:
   a) One or more electronic data relative to the identification of the second user;
   b) One or more electronic data identifying the activity of the second user;
- And wherein said electronic data relative to the identification of said second user comprise at least one electronic identification document of the second user;
- And wherein the central server system is programmed to perform an electronic assessment of the risk, said electronic assessment of the risk being implemented as a function of at least one or more of said electronic data relative to points a) and/or b) indicated above and/or as a function of further insertable electronic data, said electronic assessment of the risk comprising an automatic assignment of a certain score as a function of one or more of said data inserted so as to extrapolate a numerical value indicative of the risk.

In this way, all the above-mentioned technical inconveniences are solved.

In particular, the server system is able to collect specific electronic data and process them in order to create and/or retrieve the necessary documents to enable the professional to easily and securely fulfil the aforementioned anti-money laundering regulation.

In this way, the workload of the professional is reduced and the risk of errors is lowered.

Advantageously, a preliminary registration step of said first user (the professional or other general subject) can be provided by generating, automatically, a reserved area.

Advantageously, this step is executed only once during initial access.

Advantageously, the sending of such data relative to points a) and/or b) described above may include filling in predefined electronic fields generated by the central server system (1) and/or sending documents in electronic format.

Advantageously, the central server system can periodically update automatically the assessment of the risk as a function of any further inserted and/or updated data.

Advantageously, the central server system can generate a folder divided into at least three electronic subfolders and of which:

Subfolder relative to the identification of said second user;

Subfolder relative to the assessment of the risk for said second user;

Subfolder containing other documents in electronic format.

Advantageously, the central server system is connected to an operation centre remotely connectable to said central server system.

Advantageously, the identification step of said second user can comprise collecting electronic information relative to him or her from external databases, such as PEP lists, Adverse Media, Antiterrorist Lists.

Advantageously, such electronic information can be retrieved from the operation centre and sent to the central server system.

Advantageously, the central server system can be of the neural network artificial intelligence type.

A processor programmed to perform the steps of the method according to one or more of the above-mentioned steps is also an object of the present invention.

Advantageously, the processor can be of artificial intelligence, e.g. with neural networks.

In this case, obviously, the artificial intelligence is suitably programmed.

A mobile device software application programmed to execute the steps of the method according to one or more of the above-mentioned steps is also an object of the present invention.

A mobile telephone device including the above-mentioned software application is also clearly an object of the invention.

Finally, an object of the present invention is a system for fulfilling anti-money laundering regulations and comprising:
- A computer or mobile telephone device;
- A central server system (1) provided with suitable processor and remotely accessible through said computer or said mobile telephone device;
- An operation centre remotely connectable to said central server system;
- And wherein the processor of the central server system is programmed to execute the steps of the method according to what described above.

An object of the invention is also the relative web portal that is generated according to the method described by the relative central server system.

Said portal is flexible and can be adapted vertically to the regulation both regarding the assessment of the risk and the generation of the documents and control over time.

### Brief description of the drawings

Further features and advantages of the present method, according to the invention, will become clearer with the following description of some embodiments thereof, made by way of not-limiting example, with reference to the accompanying drawings, in which:
- Figure 1 shows a general schematic of the software management system that then generates the platform; in particular, the figure shows the user subject (the first user), e.g. the professional, accessing the central server system 1 managing the platform through his/her PC or Mobile App, thus accessing its various functions and services to fulfil the anti-money laundering regulations;
- Figure 2 schematises the user (the first user) who uses the platform concerned, which user may be a professional (e.g. an accountant) who has his or her own client package and for whom he or she uses the platform in order to fulfil the requirements of the anti-money laundering regulations for each of them;
- Figure 3 schematises a generation of the electronic folder relative to the client (the second user) of the professional (the first user);
- Figure 4 schematises the risk determination process;
- Figure 5 and Figure 6 show a possible screenshot to highlight the possibility of access to the various client folders both in the case of access from a PC (Figure 5) and in the case of an App from a mobile phone device (Figure 6) ;

### Description of some preferred embodiments

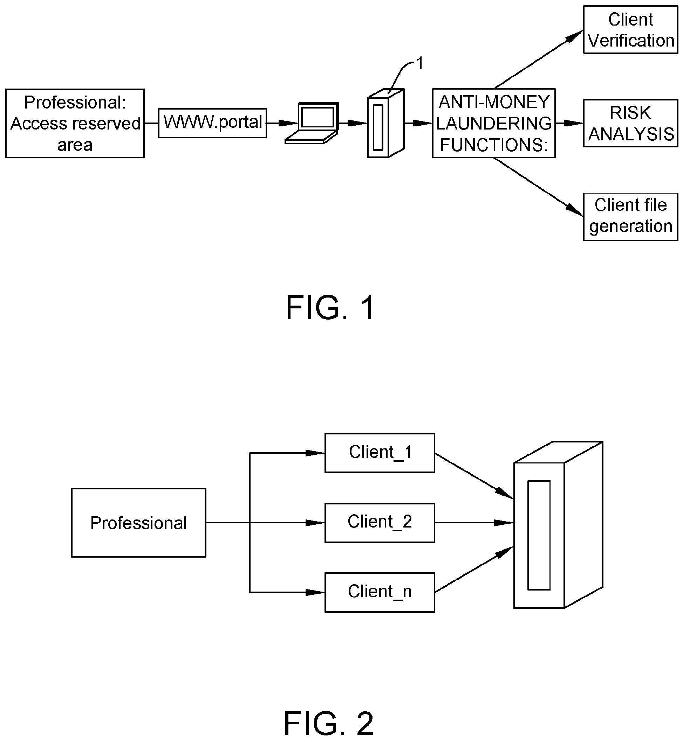

Figure 1 shows a software architecture according to the invention.

A central server system 1 is therefore provided, e.g. in the form of a single server or several electronically connected and communicating servers.

The communication protocols are those generally known and in use.

As well known, the central server system 1 is provided with specific processor and operation algorithms.

Software programming is therefore able to manage the operation as described below.

The central server system 1 can be reached remotely.

This means that one can connect to the central server system from any location with an Internet connection, such as through a PC (as schematised in Figure 1), laptop or mobile device, such as any mobile phone device.

As explained below in this description, the mobile phone device can be provided with a special software application (generically referred to as an App) that connects as such to the aforementioned central server system 1 (e.g. a single server 1) and allows it to perform substantially the same operations from the mobile phone as from a PC.

The graphic layout of the software platform that is generated through the connection to the central server system (also referred to as server 1 for sake of simplicity) with a PC connection can of course be any and be the same, similar or different to that which is generated with a mobile device through a dedicated App.

As well known, connection via a PC implies connection to the Internet in order to access the server 1 via the appropriate Internet address (e.g. www. *etc.)*, as well known.

Regardless of the graphical interfaces, a first step in the operation of this method obviously requires a registration of the user, who will be thus identified and will be able to access his/her own reserved area.

Registration, as is well known, requires one or more identifying data associated with the user.

Such data may include, among others, first and/or last name (or company name) and/or other identifying data.

In this way, the user (be it an individual or a company) is univocally identified and can access his/her reserved area.

It is clear that it is also possible to provide one or more access passwords or access methods through generally identified systems (e.g. facial recognition) in order to access one's own reserved area.

The reserved area, therefore, and as is well known, allows the creation of a kind of electronic personal box for the specific user.

The present invention is preferably aimed at users who are professionals and who, therefore, manage the use of the present invention to fulfil regulations.

For example, as schematised in Figure 2, the professional (e.g. an accountant) who can use the present invention is shown.

The professional will have his/her clients (*client*_*1...client*_*n*) who turn to him/her for professional services for which the professional is obliged to fulfil anti-money laundering regulations.

In this description, therefore, a user (or first user) is referred to as the person who has created his or her own access and reserved area on the platform.

Said first user (e.g. a professional) will act to fulfil anti-money laundering regulations while performing functions and work on behalf of one or more of his/her clients (second users).

The professional (first user), having thus created his/her reserved area as introduced above, will be able to manage his/her own client package (second users).

That being said, therefore according to the invention, the method which will be described in detail, and therefore the relative platform, includes the following functions:
Process for identifying the client (second user) and the activity carried out (acquisition of documents and information on the activity carried out by the said second user, with integration from external databases);
Analysis of the risk, linked to the client (second user) and the activity, supported by a proprietary algorithm;
Client file generation (collection of all documents in the cloud);
Monitoring and updating of information over time;
Training courses for users (webinars, E-learning);
Legal and regulatory support (via chat and ticket).

The fulfilment required by anti-money laundering regulations can be summarised in the following main activities:
- Adequate client verification (second user);
- Risk analysis (for the second user);
- Client file generation (second user).

### PROCESS FOR CARRYING OUT ADEQUATE VERIFICATION OF THE CLIENT:

In a first step, the portal requires the identification of the subjects (second users) and their activities in order to then be able to carry out a risk analysis or prepare what is necessary to fulfil the required functions.

The professional user (i.e. the first user in this description) using the platform (i.e. the professional as schematised in Figure 1) accesses the portal and thus connects to the central server system 1 through PC or through the Application from his/her mobile device.

The user (i.e. the professional) who connects to the central server system 1 accesses his or her reserved area, which, as mentioned above, is initially created.

Once access is performed, the user therefore has all the various functions of the web-platform at his disposal.

In a first step, the user (e.g. the professional accessing the platform) will see a folder that is automatically created by the system dedicated to his or her client (referred to as Folder - Client; hence the second user).

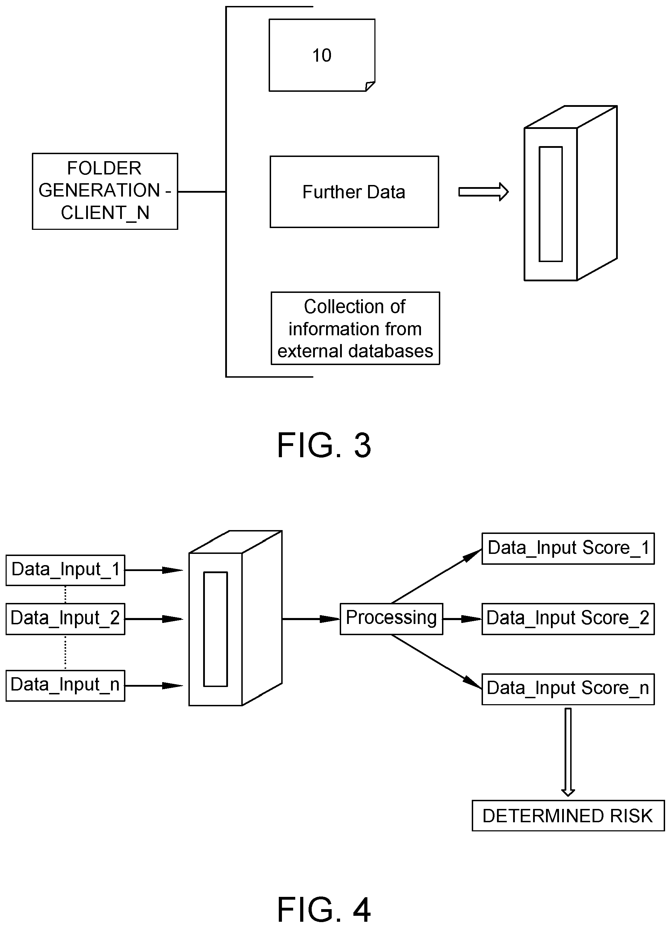

Figure 3 thus schematises the creation of the folder - Client in the central server system 1.

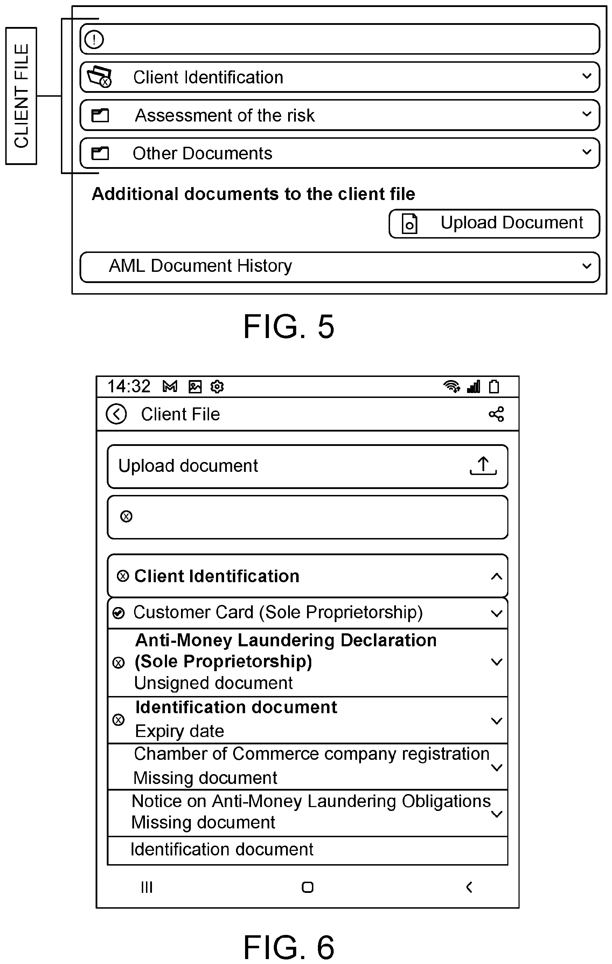

This step provides a univocal identification of the client (second user) and the acquisition of data (see subfolder "client identification" in Figure 5).

As schematised in Figure 3, an electronic document 10 identifying the client (second user) concerned is therefore required.

Figure 3 thus schematises the electronic file 10 representing the document identifying the client whose file is created.

The electronic formats that can be sent to the central server system 1 are those known such as PDF, JPEG files, and the like.

The document can be any client identification document such as an identity card, passport or driving licence.

This is followed by a step of inserting one or more further data.

The required data are inserted in specific pre-set fields that appear on the screen to the user using the platform.

The system verifies the correct insertion of the electronic data in the specific field (i.e. it checks whether the required field is complete or missing or whether the data entered is compliant/correct) and authorises one to proceed if everything is in order.

The data to be inserted essentially provide one or more of the following data:

Identification of the subject (client or second user as the case may be) for whom the professional (first user) performs the service;

Date corresponding to the insertion of the document identifying the client and the name of the professional who performed the service;

Type of activity performed by the professional (service) for the client (the professional enters this information from the mobile APP or portal).

### Client behaviour.

This part relative to the behaviour is important as the professional answers one or more pre-set questions to detail his/her impressions of the client's degree of cooperation.

In addition, information is collected from external databases with reference to the client (PEP list, Adverse Media, Antiterrorist Lists, ...).

This information is processed by a back office and inserted into the system by an operator.

Therefore, there is an operation centre communicating with the central server system 1 and communicating therewith to integrate this further data.

The system automatically updates the risk profile based on the type of information received.

In this way, a complete client box is generated.

It is obvious that a number "n" of client boxes can be created, one for each client.

### ANALYSIS OF THE RISK LINKED TO THE CLIENT AND THE ACTIVITY

On the basis of the data collected and inserted, the software, through a computer process, draws up a global risk profile for the client (linked to the type of client and the type of service).

In particular, as schematised in Figure 4, thanks to the information present on the central server system 1 (as uploaded and retrieved at the point previously described or inserted at this step), the software processes the information by assigning a score or risk level, so that it can profile the client's risk, the risk of the service and the overall risk.

Below are some example data that are analysed by the system in order to assess a risk. This data is given a score by the predetermined software.

Input data may be one or more of the following:
- Type of client (in fact, the level of risk depends on the legal nature of the client; whether it is a corporation/ partnership/ sole proprietorship/ natural person, the risk changes);
- Client matching the lists, e.g. PEP Lists, Antiterrorist Lists, Adverse Media;
- Place of residence;
- Activity performed;
- Service carried out;
- Amount of the service;
- Geographical area of the service;
- Congruity of the service;

The processor relative to the central server system 1 can also be of the neural network artificial intelligence type, which has been trained in advance by insertion of such types of information with relative score.

In any case, in use, based on the inserted information, the software is able to assign a certain score for each field inserted and thus determine an overall score that represents a risk index. The above said is shown, for example, with the schematic in Figure 4.

Based on the risk profile identified, the system monitors the periodicity of constant control.

In particular, the system, as a function of the identified risk profile, identifies the periodicity of constant control (i.e. when the risk profile needs to be updated periodically). The software manages maturities and dynamically updates the risk profile.

In substance, therefore, the system periodically updates the data to prepare the new calculation whenever one or more data have changed (either automatically or manually).

### CLIENT FILE GENERATION (COLLECTION OF ALL DOCUMENTS IN THE CLOUD):

The client file is automatically generated by the system, collecting the information and documents already present in the portal, which are inserted as described above; each document category is displayed as *"compliant"* (green) or *"not compliant"* (red).

The file is accessible from both the portal and the APP and is divided into a number of macro-categories.

Each category can be exploded, highlighting the status for each document (if green OK, if red not OK and needs user intervention). All documents can be downloaded and/or sent by email.

The example in Figure 5 shows a possible display screen for the platform user. The Figure shows the folders related to what above introduced, that is:
- Client Identification;
- Assessment of the risk;
- Other documents;

Based on the fields filled in, the software is able to verify whether all the data inserted are compliant and correct, thus giving a message confirming correctness or error.

For example, if some mandatory fields are omitted (i.e. not filled in), the system generates the relevant error.

For example in Figure 5, the folder "client identification" was indicated by the software as non-compliant ("x" symbol on the folder). This implies that one or more of the data inserted are not compliant.

Similarly, the client file is accessible from the APP. Figure 6 shows an example of a screenshot.

The whole system can advantageously operate with artificial intelligence. As far as artificial intelligence is concerned, it is preferably used in the active management of the client file, the status of which is always updated and in the event of non-compliance signals the necessary corrective actions.

As already mentioned, an operation centre communicates with the central server 1 to integrate data and provide support, which may also include technical assistance.

## Claims

1. A method, implemented by computer or through software application for mobile device, for enabling a first user to fulfil anti-money laundering regulations as a consequence of the supplying of a service thereof to a second user, the method comprising the following operations:
- Remote access of said first user to the suitably programmed central server system (1), the access being executed through said computer or said mobile device provided with suitable software application;
- Automatic generation by the central server system (1) of at least one electronic folder intended to contain one or more electronic data of said second user for which said first user supplies a service;
- Filling in said folder with said one or more pre-set electronic data;
- The central server system (1), once it has received such data, being programmed to generate an electronic file of said second user and verifying the correctness of the inserted data;
- The central server system (1) generating an error signal when one or more requested data are considered to be erroneous and/or missing;
- And wherein, further, the operation of filling in said folder comprises sending through the Internet at least one or more of the following data to the central server system:
**a)** One or more electronic data which determine a univocal identification of said second user;
**b)** One or more electronic data which identify an activity carried out by said second user;
- And wherein said electronic data relative to the identification of said second user comprise at least one electronic document (10) identifying said second user;
- And wherein the central server system is programmed to execute an electronic assessment of the risk as a function of at least one or more of said electronic data relative to points a) and/or b) indicated above and/or function of further electronic data that are/can be inserted, said assessment of the risk comprising an automatic assignment of a certain score as a function of one or more of said data inserted in such a way as to extrapolate a numerical value indicative of the risk.

2. The method, according to claim 1, wherein a preliminary registration step of said first user is provided with an automatic generation of a reserved area, said step being executed a single time.

3. The method, according to claim 1 or 2, wherein the sending of said data relative to points a) and/or b) includes filling in pre-set electronic fields generated by the central server system (1) and/or sending documents in electronic format.

4. The method, according to one or more of the previous claims, wherein the central server system periodically updates automatically the assessment of the risk as a function of any further inserted and/or updated data.

5. The method, according to one or more of the previous claims, wherein the central server system generates for each second user a folder divided into at least three electronic subfolders and of which:
A subfolder relative to the identification of the second user;
A subfolder relative to the assessment of the risk for said second user;
A subfolder containing other documents in electronic format.

6. The method, according to one or more of the previous claims, wherein the central server system is connected to an operation centre remotely connectable with said central server system.

7. The method, according to claim 6, wherein the identification of said second user further comprises collecting electronic information relative to said second user from external databases, such as PEP lists, Adverse Media, antiterrorist lists, said electronic information being retrieved by the operation centre and sent to the central server system.

8. A processor programmed to execute one or more of the steps of the method according to one or more of the previous claims.

9. A software application for mobile device programmed to execute one or more of the steps of the method according to one or more of the previous claims.

10. A system for enabling a subject to fulfil anti-money laundering regulations and comprising:
- A computer or a mobile telephone device;
- A central server system (1) provided with suitable processor and remotely accessible through said computer or said mobile telephone device;
- An operation centre remotely connectable to said central server system;
- And wherein the processor of the central server system is programmed to execute one or more of the steps of the method according to one or more of the previous claims from 1 to 7.
